# EUROPÄISCHE PATENTSCHRIFT

(11) **EP 4 355 706 B1**
(45) Veröffentlichungstag und Bekanntmachung des Hinweises auf die Patenterteilung: **06.08.2025**
(21) Anmeldenummer: 22741687.2
(22) Anmeldetag: 14.06.2022
(51) Int. Cl.: C04B 7/36

(54) **ZEMENTKLINKERANLAGE UND VERFAHREN ZUR ABSCHEIDUNG EINES FLÜCHTIGEN BESTANDTEILS**
CEMENT CLINKER INSTALLATION AND PROCESS FOR DEPOSITING A VOLATILE COMPONENT
INSTALLATION DE CLINKER DE CIMENT ET PROCÉDÉ DE DÉPÔT D'UN CONSTITUANT VOLATIL

(30) Priorität: 15.06.2021 AT 504802021
(43) Veröffentlichungstag der Anmeldung: 24.04.2024
(73) Patentinhaber: Scheuch Management Holding GmbH, 4971 Aurolzmünster (AT)
(72) Erfinder: FELLNER, Thomas, 5145 Neukirchen (AT); DREXLER, Manuel, 4600 Wels (AT); STECHER, Markus, 4810 Gmunden (AT)
(74) Vertreter: SONN Patentanwälte GmbH & Co KG
(86) Internationale Anmeldenummer: PCT/AT2022/060195
(87) Internationale Veröffentlichungsnummer: WO 2022/261686

(56) Entgegenhaltungen:
- WO-A1-2011/139787
- KR-A- 20040 010 276

## Beschreibung

Die Erfindung betrifft eine Anlage, insbesondere Zementklinkeranlage, zur Abscheidung eines flüchtigen Bestandteils, insbesondere Quecksilber, aus Rauchgasen, aufweisend:
einen Mobilcontainer mit einer Zuleitung und einer Ableitung für die Rauchgase, wobei der Mobilcontainer als transportierbarer Wechselbehälter ausgeführt ist.

Weiters betrifft die Erfindung ein Verfahren zur Abscheidung eines flüchtigen Bestandteils, insbesondere von Quecksilber, aus Rauchgasen, insbesondere der Zementklinkerherstellung.

Im Stand der Technik wurden bereits verschiedene Verfahren vorgeschlagen, mit denen Rauchgase von schädlichen Bestandteilen wie Quecksilber befreit werden können. So wird in der EP 2 892 861 beschrieben, wie bei der Zementklinkerherstellung über die Rohmaterialien Quecksilber in den Prozess eingebracht wird. Die Rohmaterialien für die Zementklinkerherstellung werden unter Wärmeaustausch mit den Ofenabgasen durch einen Vorwärmer geleitet und anschließend im Drehrohrofen gebrannt. Durch die Aufwärmung der Rohmaterialien in dem Vorwärmer wird das in den Rohmaterialien gebundene Quecksilber verdampft. Ein Teil der Rauchgase wird zunächst mit einem Heißgasfilter entstaubt und danach mit einem Verdampfungskühler auf eine Temperatur von unter 250 °C gebracht. Anschließend wird in die Rauchgase ein Sorptionsmittel wie Aktivkohle eingedüst, an welchem das Quecksilber gebunden wird. Die Aktivkohle wird über einen Schlauchfilter abgeschieden. Das gereinigte Rauchgas kann dann wieder in den Prozess rückgeführt werden.

Neben der Flugstromadsorption wird in dem EP 2 892 861 darüber hinaus bereits erwähnt, dass das Quecksilber mit Hilfe eines Fest- oder Wanderbettadsorbers aus den Rauchgasen abgeschieden werden kann.

Die Verwendung eines Wanderbettadsorbers wird darüber hinaus auch in "Lignite coke moving bed adsorber for cement plants - BAT or beyond BAT?", Harald Schoenberger in Journal of Cleaner Production, 2011 beschrieben. Bei diesem Verfahren wird das Rohgas durch einen Wanderbettreaktor geführt, welcher bei dieser Ausführung zwei Module aufweist. Jedes Modul enthält zwei großvolumige Wanderbetten aus Koks. Die Wanderbetten bestehen aus einer dünnen Schicht für die Vorreinigung und einer dicken Schicht für die weitere Reinigung. Die Abgase werden mit Hilfe eines Ventilators durch das Wanderbett gedrückt. Das gereinigte Abgas wird in zwei zentralen Leitungen gesammelt und abgeleitet. Das gesättigte Koks wird alle drei Stunden durch frisches Koks ersetzt, welches sich über die Zeit nach unten bewegt. Am unteren Ende wird das Koks abgezogen und mit Förderern zu den dünnen Wanderbetten rezykliert.

Nachteilig ist jedoch einerseits der hohe Aufwand für den Wanderbettreaktor, welcher insbesondere bewegliche Einrichtungen wie Ventilatoren und Förderer benötigt. Andererseits kam es bei diesem Stand der Technik aufgrund von Selbstentzündung der Aktivkohle zu Betriebsproblemen.

KR200410276 offenbart eine Anlage zum Verringern von Emissionen aus Abgas. Das Trockenemissionskontrollsystem basierend auf der Adsorption von ionischen Quecksilberverbindungen durch Verwendung eines Festbettadsorbers, beispielsweise auf Basis einer Mischung aus körniger Aktivkohle oder Ofenkoks. Ein Staubabscheider ist im Rohrofen vorhanden.

Somit besteht die Aufgabe der Erfindung darin, zumindest einzelne Nachteile des Standes der Technik zu lindern bzw. zu beseitigen. Die Erfindung setzt sich bevorzugt zum Ziel, eine konstruktiv einfache und betriebssichere Anlage und ein entsprechendes Verfahren für die Abscheidung von flüchtigen Bestandteilen wie Quecksilber aus den Rauchgasen zu schaffen. Diese Aufgabe wird mit einer Anlage nach Anspruch 1 und einem Verfahren nach Anspruch 11 gelöst. Bevorzugte Ausführungsbeispiele sind in den abhängigen Ansprüchen angegeben.

Erfindungsgemäß sind in dem Mobilcontainer mehrere Behälter jeweils gefüllt mit einem Festbett aus einem Sorbens, insbesondere aus einem kohlenstoffhaltigen und/oder mineralischen Sorbens, angeordnet und der Mobilcontainer weist eine Halterung zur Anbringung einer Hebevorrichtung auf.

Somit werden die Rauchgase mit Hilfe eines Festbettadsorbers von dem flüchtigen Bestandteil, insbesondere Quecksilber, befreit. Als Festbettadsorber ist ein vorzugsweise quaderförmiger Mobil- bzw. Wechselcontainer vorgesehen, in dessen Innenraum mehrere, insbesondere mehr als 5, vorzugsweise mehr als 10, beispielsweise mehr als 15, Behälter, jeweils mit dem Festbett aus dem Sorbens, angeordnet sind. Aufgrund der Ausführung als Festbett ist das Sorbens während der Abscheidung des flüchtigen Bestandteils stationär (d.h. unbeweglich) angeordnet. Um Betriebsprobleme wie Selbstzündung zu reduzieren, ist das Sorbens auf die einzelnen Behälter im Mobilcontainer aufgeteilt. Vorteilhafterweise kann so die Temperatur des Rauchgases in den Behältern mehr als 40 °C, insbesondere mehr als 50°C und bevorzugt weniger als 210°C, insbesondere weniger als 200°C, betragen, ohne die Brandschutzmaßnahmen erhöhen zu müssen. Als Sorbens kann ein kohlenstoffhaltiges Sorbens, insbesondere reine Aktivkohle, insbesondere bromierte Aktivkohle, vorgesehen sein. Alternativ kann als Sorbens eine Mischung aus Aktivkohle und Mineralien, beispielsweise Kalk, vorgesehen sein. Diese Ausführungen bieten einen besonders hohen Explosionsschutz. Die Rauchgase werden über die Zuleitung in den Mobilcontainer geführt und auf die einzelnen Behälter aufgeteilt. Bevorzugt durchströmen die Rauchgase die Behälter von unten nach oben; allerdings ist auch eine Durchströmung der Behälter von oben nach unten möglich. Dabei adsorbiert der flüchtige Bestandteil, insbesondere gasförmiges Quecksilber, an dem Sorbens. Die erfindungsgemäße Ausführung des Festbettadsorbers ist baulich besonders einfach, kompakt und reduziert die Wartungskosten. Vorteilhaft ist insbesondere, wenn der Festbettadorber-Mobilcontainer frei von einer Fördereinrichtung, wie einer Zellenradschleuse, für das Sorbens ist. Für den Austausch des Sorbens sind die Behälter im Wesentlichen luftdicht verschließbar. Im luftdicht verschlossenen Zustand können die Behälter mit dem beladenen Sorbens durch Behälter mit unbeladenem Sorbens ersetzt werden. Dieser Austausch kann beispielsweise einmal im Jahr geschehen. Vorteilhaft ist insbesondere auch die externe Entsorgung und Behandlung durch Fachpersonal. Der Mobilcontainer ist als transportierbarer Wechselbehälter ausgeführt.

Der Mobilcontainer weist eine Halterung, beispielsweise eine Öse, zur Anbringung einer Hebevorrichtung, beispielsweise eines Krans, auf. Bei einer bevorzugten Ausführungsform sind mehrere, insbesondere vier, Halterungen, insbesondere Ösen, vorgesehen. Die Halterungen sind bevorzugt dazu ausgebildet, dass das Gesamtgewicht des Mobilcontainers mit den Behältern mit den Halterungen aufgenommen werden kann.

Bei einer bevorzugten Ausführung weisen die Behälter an der Unterseite jeweils einen Lochboden, insbesondere ein Lochblech, mit ersten Öffnungen auf, durch welche die Rauchgase strömen können. Zudem können die Behälter an der Oberseite jeweils einen Lochdeckel, insbesondere ein weiteres Lochblech, aufweisen, durch welches die Rauchgase strömen können.

Um die Gefahr von Selbstzündung zu vermeiden, ist das Fassungsvermögen der Behälter (und damit das Volumen des jeweiligen Festbetts) bevorzugt jeweils geringer als 300 Liter (l), insbesondere geringer als 250 l, vorzugsweise geringer als 220 l**.** Weiters ist es bevorzugt, wenn das Fassungsvermögen der Behälter (und damit das Volumen des jeweiligen Festbetts) mehr als 100 Liter, vorzugsweise mehr als 150 Liter beträgt. Beispielsweise beträgt das Fassungsvermögen der Behälter im Wesentlichen 200 l**.**

Bei einer besonders bevorzugten Ausführungsvariante weist die Anlage einen weiteren Mobilcontainer mit einer weiteren Zuleitung für vom flüchtigen Bestandteil zu befreiende Rauchgase und einer weiteren Ableitung für vom flüchtigen Bestandteil befreite Rauchgase auf, wobei in dem weiteren Mobilcontainer weitere Behälter jeweils gefüllt mit einem Sorbens angeordnet sind. Bei dieser Ausführung sind daher (zumindest) zwei Mobilcontainer, jeweils mit mehreren Behältern für das Sorbens, vorgesehen. Dadurch kann die Abscheideleistung erhöht werden. Besonders vorteilhaft ist, dass in dieser Serienschaltung das Sorbtionspotential bis zum Schluss, d.h. bis zum Durchbruch, ausgeschöpft werden kann.

In einer ersten Schaltstellung können der Mobilcontainer und der weitere Mobilcontainer in Serie geschaltet sein, wobei die Ableitung des Mobilcontainers mit der weiteren Zuleitung des weiteren Mobilcontainers verbunden ist. Somit werden die Rauchgase zuerst durch die Behälter im Mobilcontainer und danach durch die weiteren Behälter im weiteren Mobilcontainer geführt. Damit wird die Abscheideleistung für den flüchtigen Bestandteil, insbesondere Quecksilber, erhöht.

In einer zweiten Schaltstellung können der Mobilcontainer und der weitere Mobilcontainer parallel geschaltet sein, wobei die vom flüchtigen Bestandteil zu befreienden Rauchgase wahlweise der Zuleitung des Mobilcontainers oder der weiteren Zuleitung des weiteren Mobilcontainers zuführbar sind. Wird der flüchtige Bestandteil in der Parallelschaltung ausschließlich mit dem weiteren Mobilcontainer abgeschieden, kann der Mobilcontainer aus der Anlage entnommen werden, um das mit dem flüchtigen Bestandteil beladene Festbett aus Sorbens durch ein unbeladenes, von flüchtigem Bestandteil freies Sorbens zu ersetzen. Vorteilhafterweise muss die Anlage für den Austausch des Sorbens nicht außer Betrieb genommen werden. Zu diesem Zweck kann der Mobilcontainer von der Zu- und der Ableitung getrennt werden. Beispielsweise können die Zu- bzw. Ableitung jeweils mit einem Blindflansch versperrt werden. Für die Entnahme des Mobilcontainers kann ein Kran verwendet werden, welcher bei einer bevorzugten Ausführung mit der Halterung verbunden wird. Die Behälter können anschließend entsorgt werden. Danach wird der Mobilcontainer mit frischen Behältern bestückt. Während des Austauschs der Behälter kann das Rauchgas durch die weiteren Behälter innerhalb des weiteren Mobilcontainers geführt werden. Der Austausch des Sorbens in den weiteren Behältern des weiteren Mobilcontainers erfolgt entsprechend.

Der weitere Mobilcontainer mit den weiteren Behältern ist bevorzugt ident zum Mobilcontainer mit den Behältern. Somit können sich alle bevorzugten Ausführungsvarianten des Mobilcontainers gleichermaßen auf den weiteren Mobilcontainer mit den weiteren Behältern beziehen.

Als Behälter ist bevorzugt ein Fass, insbesondere mit einem Fassungsvermögen von mehr als 100 Liter, vorzugsweise von mehr als 150 Liter, beispielsweise im Wesentlichen 200 Liter, vorgesehen. Bevorzugt weist das Fass einen kreisrunden Querschnitt auf.

Der Mobilcontainer ist vorzugsweise als Quader mit einer Länge, einer Breite und einer Höhe ausgeführt, wobei bevorzugt die Länge größer, insbesondere um ein Mehrfaches größer, als die Breite des Mobilcontainers ist.

Bevorzugt weist der Mobilcontainer eine Länge von 5 Meter (m) bis 13 m, insbesondere im Wesentlichen 12 m, eine Breite von 2 m bis 3 m, insbesondere im Wesentlichen 2,5 m, und eine Höhe von 1,5 m bis 3 m, insbesondere im Wesentlichen 2 m, auf.

Bevorzugt sind im Innenraum des Mobilcontainers mehrere Reihen, insbesondere zumindest drei Reihen, mit jeweils mehreren, insbesondere mit mehr als drei, beispielsweise mit mehr als fünf, Behältern vorgesehen.

Um die zuströmenden Rauchgase auf die einzelnen Behälter im Mobilcontainer aufzuteilen, weist der Mobilcontainer bevorzugt einen Zwischenboden mit Durchtrittsöffnungen auf, über denen die Behälter mit dem Sorbens angeordnet, insbesondere aufgestellt, sind. Bevorzugt erstreckt sich der Zwischenboden parallel zu einem Boden des Mobilcontainers. Der Zwischenboden ist bevorzugt näher am Boden als an einer Decke des Mobilcontainers angeordnet. Die Behälter weisen bevorzugt unterseitige Öffnungen auf, durch die die Rauchgase in das jeweilige Festbett aus Sorbens gelangen.

Die Zuleitung und die Ableitung sind bevorzugt so angeordnet, dass die Behälter innerhalb des Mobilcontainers von unten nach oben von den Rauchgasen durchströmt werden.

Für die Zwecke dieser Offenbarung beziehen sich die Ortsangaben, wie "oben", "unten", "horizontal", "vertikal", auf die bestimmungsgemäße Anordnung der Anlage, insbesondere des Mobilcontainers, auf einem horizontalen Untergrund. Die Richtungsangaben wie "vor" und "nach" beziehen sich auf die Strömungsrichtung der Rauchgase.

Um eine Entstaubung der Rauchgase vor dem Abscheiden des flüchtigen Bestandteils durchzuführen, ist bevorzugt ein Staubfilter, insbesondere ein Heißgasfilter, vor dem Mobilcontainer angeordnet. Das Heißgasfilter ist für eine Entstaubung der Rauchgase bei einer Temperatur von mehr als 250 °C eingerichtet. Der am Heißgasfilter abgeschiedene Staub kann rückgeführt werden. Bei einer Ausführung der Anlage als Zementklinkeranlage kann der Staub in den Vorwärmer rückgeführt werden.

Um die Rauchgase auf die passende Temperatur für die Abscheidung des flüchtigen Bestandteils abzukühlen, ist bei einer Ausführungsvariante ein Kühler, insbesondere ein Verdampfungskühler oder ein Wärmetauscher, zwischen dem Staubfilter und dem Mobilcontainer angeordnet. Mit Hilfe des Kühlers können die Rauchgase auf die für die Abscheidung des flüchtigen Bestandteils erforderliche Temperatur von insbesondere weniger als 210 °C, beispielsweise auf 50 bis 200°C, abgekühlt werden. Bei dem Verdampfungskühler erfolgt die Abkühlung des Abgasstroms durch Eindüsung von feinsten Wassertropfen in dem heißen Abgasstrom. Durch den Verdampfungsprozess wird den Rauchgasen Wärme entzogen und das gewünschte Temperaturniveau für die nachfolgenden Abgasrenigung erreicht. Besonders günstig ist hingegen die Ausführung des Kühlers als Wärmetauscher. Damit können die Nachteile eines Verdampfungskühlers vermieden werden, welche insbesondere darin liegen, dass es zu einer Verklumpung im Prozess kommen kann. Weiters können saure Gasbestandteile mit dem Wasser aus der Quenchung reagieren, wodurch ein saures Milieu entsteht, das stark korrosiv wirkt.

Mit einer Einrichtung zur Verschiebung von Wärme der Rauchgase vor dem Mobilcontainer auf die Rauchgase nach dem Mobilcontainer kann die Energieeffizienz erhöht und die Korrosion reduziert werden. Die Einrichtung kann den Wärmetauscher vor dem Mobilcontainer und einen weiteren Wärmetauscher nach dem Mobilcontainer aufweisen. Zwischen dem Wärmetauscher und dem weiteren Wärmetauscher kann ein Wärmeübertragungsmedium geführt sein.

Sind die Rauchgase stark mit Stickoxiden (NOx) belastet, kann ein SCR-Modul (SCR= Selektive Katalytische Reduktion) zwischen dem Staubfilter und dem Mobilcontainer angeordnet sein. Das SCR-Modul kann neben der Entstickung auch noch zur Minimierung der Ammoniakkonzentration im Rauchgas dienen. Das Ammoniak wird nämlich von der Aktivkohle adsorbiert und neutralisiert diese. Dadurch würde sich eine schlechtere Adsorption an Quecksilber ergeben, welches ein saures Milieu für die Adsorption benötigt.

Das erfindungsgemäße Verfahren zur Abscheidung des flüchtigen Bestandteils, insbesondere von Quecksilber, aus Rauchgasen, insbesondere der Zementklinkerherstellung, weist zumindest die folgenden Schritte auf:
Zuführen der Rauchgase in einen Mobilcontainer, in welchem mehrere Behälter gefüllt mit einem Festbett aus einem Sorbens, insbesondere einem kohlenstoffhaltigen und/oder mineralischen Sorbens, angeordnet sind;
Abscheiden des flüchtigen Bestandteils der Rauchgase am Sorbens in den Behältern; und
Ableiten der Rauchgase aus dem Mobilcontainer.

Um die Abscheidung des flüchtigen Bestandteils in den Rauchgasen zu verbessern, können die Rauchgase nach dem Durchströmen des Mobilcontainers durch einen weiteren Mobilcontainer geführt werden, in welchem weitere Behälter jeweils gefüllt mit einem Sorbens, insbesondere einem kohlenstoffhaltigen und/oder mineralischen Sorbens, angeordnet sind.

In einer Parallelschaltung können die Rauchgase zum Austauschen des beladenen Sorbens in den Behältern des Mobilcontainers ausschließlich durch die weiteren Behälter des weiteren Mobilcontainers geführt werden.

Das Verfahren kann weiters den folgenden Schritt aufweisen:
Entstauben der Rauchgase, insbesondere mit einem Heißgasfilter, vor dem Zuführen der Rauchgase in den Mobilcontainer.

Bei einer bevorzugten Anwendung wird ein Verfahren zur Herstellung von Zementklinker mit den folgenden Schritten durchgeführt:
Brennen von Rohmaterial zu Zementklinker in einem Ofen,
Abscheidung eines flüchtigen Bestandteils, insbesondere Quecksilber, aus im Ofen entstandenen Rauchgasen mit einem Verfahren in einem der oben beschriebenen Ausführungsvarianten.

Die Erfindung wird im Folge anhand von bevorzugten Ausführungsbeispielen in den Zeichnungen weiter erläutert.
Fig. 1 zeigt schematisch eine Zementklinkeranlage mit einem Feststoffadsorber-Mobilcontainer für die Befreiung der Rauchgase aus dem Vorwärmturm von Quecksilber.
Fig. 2 zeigt im Detail den Mobilcontainer, welcher mehrere Reihen von Behältern mit kohlenstoffhaltigem Sorbens enthält.
Fig. 3 zeigt einen Schnitt durch den Mobilcontainer der Zementklinkeranlage.
Fig. 4 zeigt ein alternatives Anlagenschema, bei welchem zwei Mobilcontainer, jeweils mit Behältern für das kohlenstoffhaltige Sorbens, wahlweise in Serie oder parallel betrieben werden.

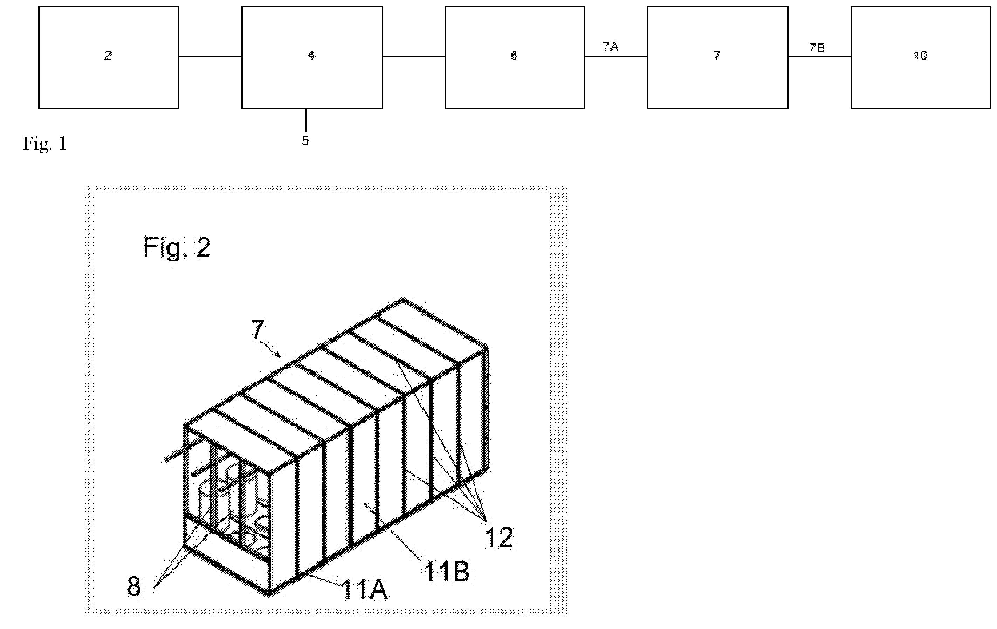

In Fig. 1 ist schematisch eine Zementklinkeranlage 1 zur Herstellung von Zementklinker aus Rohmaterial, insbesondere Rohmehl, gezeigt. Die Anlage 1 weist einen herkömmlichen Anlagenaufbau, hier mit Feld 2 symbolisiert, auf. Zu diesem Anlagenaufbau 2 zählt ein (Drehrohr-)Ofen, welcher einerseits mit einem Klinkerkühler und andererseits mit einer Vorwärmstufe verbunden sein kann. Die Vorwärmstufe kann eine Zyklonkaskade mit mehreren Zyklonen aufweisen, mit welchen das Rohmaterial vorgewärmt wird. Zu diesem Zweck kann das Rohmaterial über eine Materialaufgabe in den obersten Zyklon der Vorwärmstufe aufgegeben werden. Das vorgewärmte Rohmaterial gelangt in den Drehrohrofen, in welchem das Rohmaterial zur Herstellung des Zementklinkers gebrannt wird. Die bei der Verbrennung entstehenden Ofenabgase bzw. Rauchgase werden gegen den Strom des Rohmaterials durch die Vorwärmstufe geführt. Weiters kann die Anlage einen Kalzinator aufweisen. Die Zementklinkeranlage 1 kann weiters eine Rohmühle aufweisen, in welcher das Rohmaterial vermahlen und insbesondere mit Hilfe der Rauchgase getrocknet werden kann.

In der Ausführungsform der Fig. 1 werden Rauchgase aus dem Anlagenaufbau 2, insbesondere von der Vorwärmstufe oder vom Kalzinator, abgezogen (vgl. Pfeil 3). Die Rauchgase werden einem Staubfilter 4, hier einem Heißgasfilter, zugeführt. Das Heißgasfilter weist zumindest ein Filterelement, vorzugsweise mehrere Filterelemente, insbesondere Filterkerzen, vorzugsweise aus einer Keramik oder Metall, auf, an denen der Staub der Rauchgase abgeschieden wird. Der abgeschiedene Staub kann in den Vorwärmer aufgegeben oder einem Silo zugeführt werden (vgl. Pfeil 5). Anschließend werden die Rauchgase mit Hilfe eines Kühlers, hier als Wärmetauschers 6 ausgeführt, auf Temperaturen von 50 bis 200 °C abgekühlt, um die Abscheidung eines flüchtigen Bestandteils, insbesondere Quecksilber, aus den Rauchgasen zu ermöglichen. Die vom Wärmetauscher 6 aufgenommene Wärme der Rauchgase kann an anderer Stelle der Zementklinkeranlage 1 genutzt werden.

Die entstaubten und abgekühlten Rauchgase werden zur Abscheidung des flüchtigen Bestandteils durch einen Mobilcontainer 7 mit einer Zuleitung 7A und einer Ableitung 7B für Rauchgase geleitet. Schließlich können die vom flüchtigen Bestandteil befreiten Rauchgase noch einer Abgasreinigungsanlage 10 zugeführt werden.

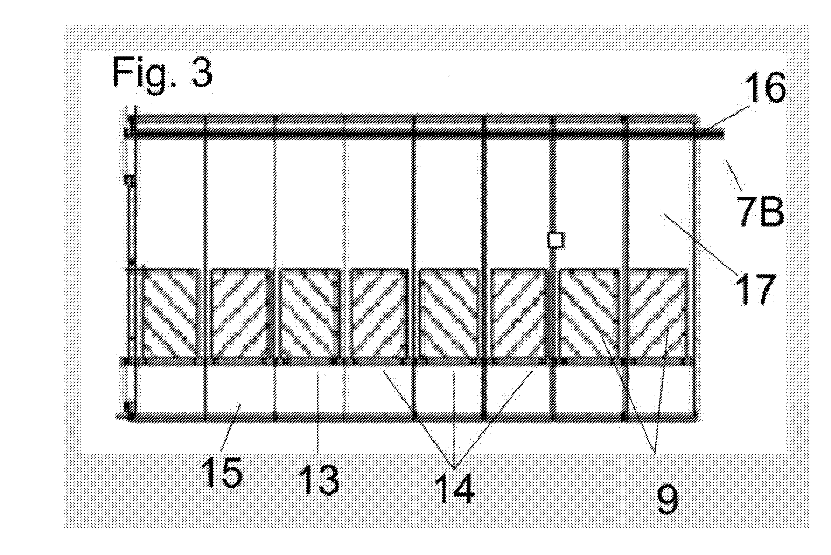

Der Mobilcontainer 7 für die Reduktion des flüchtigen Bestandteils in den Rauchgasen ist in den Fig. 2 und 3 im Detail dargestellt.

Demnach ist der Mobilcontainer 7 quaderförmig mit einer Länge, einer Breite und einer Höhe ausgebildet, wobei die Länge bevorzugt größer als die Breite ist. Im Inneren des Mobilcontainers 7 sind mehrere Behälter 8 angeordnet, welche jeweils mit einem Festbett 9, d.h. mit einer stationären Anordnung, insbesondere einer Schüttung, aus vorzugsweise kohlenstoffhaltigem Sorbens, auch als Sorptionsmittel bezeichnet, gefüllt sind. Als Behälter 8 können insbesondere Fässer mit kreisrundem Querschnitt vorgesehen sein. Das Fassungsvermögen der Fässer kann beispielsweise im Wesentlichen 200 Liter betragen. In der gezeigten Ausführung weist der Mobilcontainer 7 einen Boden 11A, Seitenwände 11B und eine Decke 11C auf. Weiters sind Streben 12, bevorzugt zumindest an den Seitenwänden 11B und der Decke 11C, vorgesehen. Innerhalb des Mobilcontainers 7 ist ein Zwischenboden 13 näher am Boden 10 als an der Decke 12 angeordnet. Die Behälter 8 stehen auf dem Zwischenboden 13. Am Zwischenboden 13 sind Durchtrittsöffnungen 14 ausgebildet, über denen die Behälter 8 mit dem kohlenstoffhaltigen Sorbens angeordnet sind. Die Behälter 8 weisen an der Unterseite einen Lochboden, insbesondere ein Lochblech, mit Öffnungen auf, durch die die Rauchgase eintreten können. Dadurch können die Rauchgase von einem Zwischenraum 15 unterhalb des Zwischenbodens 13 über die Durchtrittsöffnungen 14 in die Behälter 8 strömen. Mit Hilfe des kohlenstoffhaltigen Sorbens wird der Anteil an flüchtigem Bestandteil, insbesondere Quecksilber, in den Rauchgasen reduziert. Nach dem Passieren der Behälter 8 werden die Rauchgase über die Ableitung 7B, welche zumindest eine Rohrleitung 16 aufweisen kann, aus dem Raum 17 oberhalb des Zwischenbodens 13 abgezogen.

Somit kann ein Verfahren zur Abscheidung eines flüchtigen Bestandteils, insbesondere von Quecksilber, aus Rauchgasen, insbesondere der Zementklinkerherstellung, mit den folgenden Schritten durchgeführt werden:
Zuführen der Rauchgase in einen Mobilcontainer 7, in welchem mehrere Behälter 8 jeweils gefüllt mit einem Festbett aus (kohlenstoffhaltigem) Sorbens angeordnet sind;
Abscheiden des flüchtigen Bestandteils der Rauchgase am (kohlenstoffhaltigen) Sorbens in den Behältern 8; und
Ableiten der Rauchgase aus dem Mobilcontainer 7.

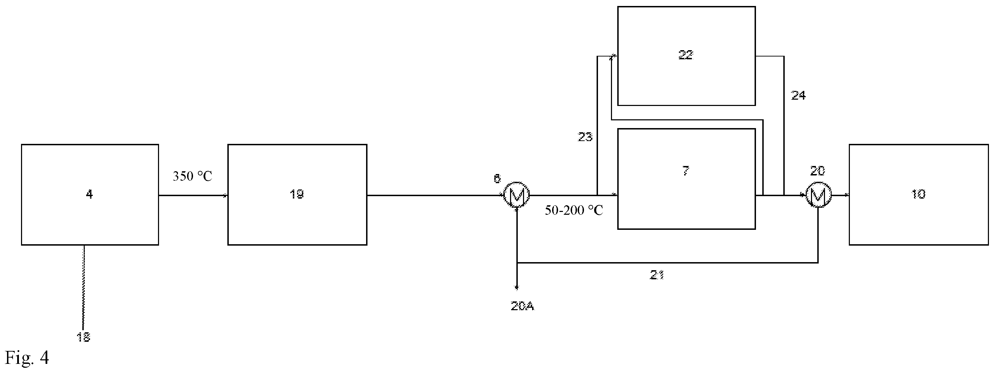

In Fig. 4 ist ein alternatives Anlagenschema gezeigt, wobei nachstehend nur auf die Unterschiede den Fig. 1 bis 3 eingegangen werden soll.

In der Ausführung der Fig. 4 werden die Rauchgase zunächst ebenfalls einem Staubfilter 4 zugeführt, an welchem von Quecksilber im Wesentlichen freier Staub abgeschieden und danach beispielsweise der Vorwärmstufe rückgeführt wird (vgl. Pfeil 18). Die Rauchgase werden sodann, beispielsweise mit im Wesentlichen 350 °C, einem SCR-Modul 19 zugeführt, welches für die selektive katalytische Reduktion von Stickstoffverbindungen ausgerichtet ist ("Entstickung"). Vor dem Mobilcontainer 7 werden die Rauchgase dem Wärmetauscher 6 zugeführt, welcher zusammen mit einem weiteren Wärmetauscher 20 nach dem Mobilcontainer 7 eine Einrichtung 21 zur Verschiebung von Wärme der Rauchgase vor dem Mobilcontainer 7 auf die Rauchgase nach dem Mobilcontainer 7 bildet. Mit Hilfe der Einrichtung 21 wird das passende Temperaturniveau, insbesondere 50 bis 200 °C, für die Abscheidung des flüchtigen Bestandteils im Mobilcontainer 7 eingehalten und zugleich der Wärmegehalt der Rauchgase rückgewonnen. Zwischen dem Wärmetauscher 6 und dem weiteren Wärmetauscher 20 kann ein Wärmeaustauschmedium geführt sein, welches am Wärmetauscher 6 die Wärme der Rauchgase vor dem Mobilcontainer aufnimmt und am weiteren Wärmetauscher 20 die Wärme an die Rauchgase abgibt. Wie mit Pfeil 20A veranschaulicht ist, kann die vom Wärmetauscher 6 aufgenommene Wärme auch an eine andere Stelle der Zementklinkerherstellung übertragen werden. Schließlich werden die Rauchgase der Abgasreinigungsanlage 10 zugeführt oder in den Prozess rückgeführt.

In der Ausführung der Fig. 4 ist zudem ein weiterer Mobilcontainer 22 mit einer weiteren Zuleitung 23 und einer weiteren Ableitung 24 für die Rauchgase vorgesehen. Der weitere Mobilcontainer 22 ist ident zum Mobilcontainer 7. Demnach sind im Inneren des weiteren Mobilcontainers 22 weitere Behälter angeordnet, die jeweils mit einem kohlenstoffhaltigen Sorbens gefüllt sind. Der Mobilcontainer 7 und der weitere Mobilcontainer 22 können einzeln oder hintereinander durchströmt werden. In einer ersten Schaltstellung sind der Mobilcontainer 7 und der weitere Mobilcontainer 22 in Serie geschaltet, wobei die Ableitung 7B des Mobilcontainers 7 mit der weiteren Zuleitung 23 des weiteren Mobilcontainers 22 verbunden ist. In der ersten Schaltstellung kann das gesamte Rauchgas zuerst durch den Mobilcontainer 7 und danach durch den weiteren Mobilcontainer 22 geleitet werden. Zu diesem Zweck kann die in Fig. 4 ersichtliche Verbindung zwischen der Zuleitung 7A des Mobilcontainers 7 und der weiteren Zuleitung 23 des weiteren Mobilcontainers 22 gesperrt sein. In einer zweiten Schaltstellung sind der Mobilcontainer 7 und der weitere Mobilcontainer 22 parallel geschaltet. Somit können die Rauchgase entweder der Zuleitung 7A des Mobilcontainers 7 oder der weiteren Zuleitung 23 des weiteren Mobilcontainers 22 (oder gleichzeitig der Zuleitung 7A und der weiteren Zuleitung 23) zugeführt werden. Zum Austauschen des kohlenstoffhaltigen Sorbens in den Behältern 8 des Mobilcontainers 7 können die Zuleitung 7A und die Ableitung 7B versperrt werden, so dass die Rauchgase vollständig über den weiteren Mobilcontainer 22 geführt werden. Anschließend können die Behälter 8 samt dem beladenen Sorbens gegen Behälter 8 mit unbeladenem Sorbens ausgetauscht werden.

## Patentansprüche

1. Anlage, insbesondere Zementklinkeranlage (1), zur Abscheidung eines flüchtigen Bestandteils, insbesondere Quecksilber, aus Rauchgasen, aufweisend:
einen Mobilcontainer (7) mit einer Zuleitung (7A) und einer Ableitung (7B) für die Rauchgase, wobei der Mobilcontainer (7) als transportierbarer Wechselbehälter ausgeführt ist,
**dadurch gekennzeichnet, dass**
in dem Mobilcontainer (7) mehrere Behälter (8) jeweils gefüllt mit einem Festbett (9) aus einem Sorbens, insbesondere einem kohlenstoffhaltigen und/oder mineralischen Sorbens, angeordnet sind, wobei der Mobilcontainer (7) eine Halterung zur Anbringung einer Hebevorrichtung aufweist.

2. Anlage (1) nach Anspruch 1, **gekennzeichnet durch**
einen weiteren Mobilcontainer (22) mit einer weiteren Zuleitung (23) und einer weiteren Ableitung (24) für Rauchgase, wobei in dem weiteren Mobilcontainer (22) weitere Behälter jeweils gefüllt mit einem Sorbens angeordnet sind.

3. Anlage (1) nach Anspruch 2, **dadurch gekennzeichnet, dass** der Mobilcontainer (7) und der weitere Mobilcontainer (22) in einer ersten Schaltstellung in Serie geschaltet sind, wobei die Ableitung (7B) des Mobilcontainers (7) mit der weiteren Zuleitung (23) des weiteren Mobilcontainers (22) verbunden ist.

4. Anlage (1) nach Anspruch 2 oder 3, **dadurch gekennzeichnet, dass** der Mobilcontainer (7) und der weitere Mobilcontainer (22) in einer zweiten Schaltstellung parallel geschaltet sind, wobei die Rauchgase wahlweise der Zuleitung (7A) des Mobilcontainers (7) oder der weiteren Zuleitung des weiteren Mobilcontainers (22) zuführbar sind.

5. Anlage (1) nach einem der Ansprüche 1 bis 4, **dadurch gekennzeichnet, dass** als Behälter (8) jeweils ein Fass, insbesondere mit einem Fassungsvermögen von mehr als 100 Liter, vorzugsweise von mehr als 150 Liter, und bevorzugt von weniger als 300 Liter, besonders bevorzugt von weniger als 250 Liter, beispielsweise im Wesentlichen 200 Liter, vorgesehen ist.

6. Anlage (1) nach einem der Ansprüche 1 bis 5, **dadurch gekennzeichnet, dass** der Mobilcontainer (22) einen Zwischenboden (13) mit Durchtrittsöffnungen (14) aufweist, über denen die Behälter (8) mit dem Sorbens angeordnet sind.

7. Anlage (1) nach einem der Ansprüche 1 bis 6, **dadurch gekennzeichnet, dass** ein Staubfilter (4), insbesondere ein Heißgasfilter, vor dem Mobilcontainer (7) angeordnet ist.

8. Anlage (1) nach Anspruch 7, **dadurch gekennzeichnet, dass** ein Kühler, insbesondere ein Verdampfungskühler oder ein Wärmetauscher, zwischen dem Staubfilter (4) und dem Mobilcontainer (7) angeordnet ist.

9. Anlage (1) nach einem der Ansprüche1 bis 8, **dadurch gekennzeichnet, dass** eine Einrichtung (21) zur Verschiebung von Wärme der Rauchgase vor dem Mobilcontainer (7) auf die Rauchgase nach dem Mobilcontainer (7) vorgesehen ist.

10. Anlage (1) nach einem der Ansprüche 7 bis 9, **dadurch gekennzeichnet, dass** ein SCR-Modul zwischen dem Staubfilter (4) und dem Mobilcontainer (22) angeordnet ist.

11. Verfahren zur Abscheidung eines flüchtigen Bestandteils, insbesondere von Quecksilber, aus Rauchgasen, insbesondere der Zementklinkerherstellung, mit den Schritten:
Zuführen der Rauchgase in einen Mobilcontainer (7), in welchem mehrere Behälter (8) gefüllt mit einem Festbett (9) aus einem Sorbens, insbesondere einem kohlenstoffhaltigem und/oder mineralischem Sorbens, angeordnet sind, wobei der Mobilcontainer (7) als transportierbarer Wechselbehälter ausgeführt ist;
Abscheiden des flüchtigen Bestandteils der Rauchgase am Sorbens in den Behältern (8); und
Ableiten der Rauchgase aus dem Mobilcontainer (7).

12. Verfahren nach Anspruch 11, **dadurch gekennzeichnet, dass** die Rauchgase nach dem Durchströmen des Mobilcontainers (7) durch einen weiteren Mobilcontainer (22) geführt werden, in welchem weitere Behälter jeweils gefüllt mit einem Sorbens angeordnet sind.

13. Verfahren nach Anspruch 12, **dadurch gekennzeichnet, dass** die Rauchgase zum Austauschen des beladenen Sorbens in den Behältern (8) des Mobilcontainers (7) ausschließlich durch die weiteren Behälter (8) des weiteren Mobilcontainers (22) geführt werden.

14. Verfahren nach Anspruch 12 oder 13, **gekennzeichnet durch**:
Entstauben der Rauchgase, insbesondere mit einem Heißgasfilter, vor dem Zuführen der Rauchgase in den Mobilcontainer (7).

## Claims

1. Installation, in particular a cement clinker installation (1), for separating a volatile component, in particular mercury, from flue gases, comprising:
a mobile container (7) with an inlet line (7A) and an outlet line (7B) for the flue gases, the mobile container (7) being designed as a transportable swap body,
**characterized in that**
several vessels (8), each filled with a fixed bed (9) of a sorbent, in particular a carbon-containing and/or mineral sorbent, are arranged in the mobile container (7),
wherein the mobile container (7) comprises a mount for attaching a lifting device.

2. Installation (1) according to claim 1, **characterized by** a further mobile container (22) with a further inlet line (23) and a further outlet line (24) for flue gases, in which further vessels, each filled with a sorbent, are arranged.

3. Installation (1) according to claim 2, **characterized in that** the mobile container (7) and the further mobile container (22) are connected in series in a first switching position, the outlet line (7B) of the mobile container (7) being connected to the further inlet line (23) of the further mobile container (22).

4. Installation (1) according to claim 2 or 3, **characterized in that** the mobile container (7) and the further mobile container (22) are connected in parallel in a second switching position, the flue gases being feedable selectively to the inlet line (7A) of the mobile container (7) or to the further inlet line of the further mobile container (22).

5. Installation (1) according to one of claims 1 to 4, **characterized in that** a drum is provided in each case as vessel (8), in particular with a capacity of more than 100 litres, preferably of more than 150 litres and preferably of less than 300 litres, particularly preferably of less than 250 litres, for example substantially 200 litres.

6. Installation (1) according to one of claims 1 to 5, **characterized in that** the mobile container (22) comprises an intermediate floor (13) with passage openings (14), above which the vessels (8) with the sorbent are arranged.

7. Installation (1) according to one of claims 1 to 6, **characterized in that** a dust filter (4), in particular a hot-gas filter, is arranged upstream of the mobile container (7).

8. Installation (1) according to claim 7, **characterized in that** a cooler, in particular an evaporative cooler or a heat exchanger, is arranged between the dust filter (4) and the mobile container (7).

9. Installation (1) according to one of claims 1 to 8, **characterized in that** a device (21) for shifting heat of the flue gases upstream of the mobile container (7) onto the flue gases downstream of the mobile container (7) is provided.

10. Installation (1) according to one of claims 7 to 9, **characterized in that** an SCR module is arranged between the dust filter (4) and the mobile container (22).

11. Method for separating a volatile component, in particular mercury, from flue gases, in particular from cement-clinker production, having the steps of:
feeding the flue gases into a mobile container (7) in which several vessels (8) filled with a fixed bed (9) of a sorbent, in particular a carbon-containing and/or mineral sorbent, are arranged, the mobile container (7) being designed as a transportable swap body;
separating the volatile component of the flue gases on the sorbent in the vessels (8); and
discharging the flue gases from the mobile container (7).

12. Method according to claim 11, **characterized in that** the flue gases, after flowing through the mobile container (7), are passed through a further mobile container (22) in which further vessels, each filled with a sorbent, are arranged.

13. Method according to claim 12, **characterized in that**, for replacing the loaded sorbent in the vessels (8) of the mobile container (7), the flue gases are conducted exclusively through the further vessels (8) of the further mobile container (22).

14. Method according to claim 12 or 13, **characterized by** dedusting the flue gases, in particular with a hot-gas filter, before feeding the flue gases into the mobile container (7).

## Revendications

1. Installation, en particulier installation de clinker de ciment (1), pour la séparation d'un composant volatil, en particulier du mercure, des gaz de fumée, comprenant :
un conteneur mobile (7) avec une conduite d'amenée (7A) et une conduite d'évacuation (7B) pour les gaz de fumée, le conteneur mobile (7) étant conçu comme un récipient interchangeable transportable,
**caractérisée en ce que**
dans le conteneur mobile (7) sont disposés plusieurs récipients (8) chacun rempli d'un lit fixe (9) d'un sorbant, en particulier un sorbant carboné et/ou minéral, le conteneur mobile (7) comprenant un support pour la fixation d'un dispositif de levage.

2. Installation (1) selon la revendication 1, **caractérisée par**
un autre conteneur mobile (22) avec une autre conduite d'amenée (23) et une autre conduite d'évacuation (24) pour les gaz de fumée, dans lequel d'autres récipients chacun rempli d'un sorbant sont disposés dans l'autre conteneur mobile (22).

3. Installation (1) selon la revendication 2, **caractérisée en ce que** le conteneur mobile (7) et l'autre conteneur mobile (22) sont connectés en série dans une première position de commutation, la conduite d'évacuation (7B) du conteneur mobile (7) étant reliée à l'autre conduite d'amenée (23) de l'autre conteneur mobile (22).

4. Installation (1) selon la revendication 2 ou 3, **caractérisée en ce que** le conteneur mobile (7) et l'autre conteneur mobile (22) sont connectés en parallèle dans une deuxième position de commutation, les gaz de fumée pouvant être amenés au choix à la conduite d'amenée (7A) du conteneur mobile (7) ou à l'autre conduite d'amenée de l'autre conteneur mobile (22).

5. Installation (1) selon l'une des revendications 1 à 4, **caractérisée en ce que** chaque récipient (8) est prévu sous forme de fût, en particulier avec une capacité de plus de 100 litres, de préférence de plus de 150 litres, et de préférence de moins de 300 litres, particulièrement de préférence de moins de 250 litres, par exemple essentiellement de 200 litres.

6. Installation (1) selon l'une des revendications 1 à 5, **caractérisée en ce que** le conteneur mobile (22) comprend un plancher intermédiaire (13) avec des ouvertures de passage (14), au-dessus desquelles sont disposés les récipients (8) avec le sorbant.

7. Installation (1) selon l'une des revendications 1 à 6, **caractérisée en ce qu'**un filtre à poussière (4), en particulier un filtre à gaz chaud, est disposé avant le conteneur mobile (7).

8. Installation (1) selon la revendication 7, **caractérisée en ce qu'**un refroidisseur, en particulier un refroidisseur par évaporation ou un échangeur de chaleur, est disposé entre le filtre à poussière (4) et le conteneur mobile (7).

9. Installation (1) selon l'une des revendications 1 à 8, **caractérisée en ce qu'**un dispositif (21) est prévu pour transférer la chaleur des gaz de fumée avant le conteneur mobile (7) aux gaz de fumée après le conteneur mobile (7).

10. Installation (1) selon l'une des revendications 7 à 9, **caractérisée en ce qu'**un module SCR est disposé entre le filtre à poussière (4) et le conteneur mobile (22).

11. Procédé de séparation d'un composant volatil, en particulier du mercure, des gaz de fumée, en particulier de la production de clinker de ciment, comprenant les étapes suivantes :
amenée des gaz de fumée dans un conteneur mobile (7), dans lequel sont disposés plusieurs récipients (8) remplis d'un lit fixe (9) d'un sorbant, en particulier un sorbant carboné et/ou minéral, le conteneur mobile (7) étant conçu comme un récipient interchangeable transportable ;
séparation du composant volatil des gaz de fumée sur le sorbant dans les récipients (8) ; et
évacuation des gaz de fumée du conteneur mobile (7).

12. Procédé selon la revendication 11, **caractérisé en ce que** les gaz de fumée, après avoir traversé le conteneur mobile (7), sont dirigés à travers un autre conteneur mobile (22), dans lequel d'autres récipients chacun rempli d'un sorbant sont disposés.

13. Procédé selon la revendication 12, **caractérisé en ce que** les gaz de fumée, pour remplacer le sorbant chargé dans les récipients (8) du conteneur mobile (7), sont dirigés exclusivement à travers les autres récipients (8) de l'autre conteneur mobile (22) .

14. Procédé selon la revendication 12 ou 13, **caractérisé en ce que**
le dépoussiérage des gaz de fumée, en particulier avec un filtre à gaz chaud, avant l'amenée des gaz de fumée dans le conteneur mobile (7).
